# EUROPEAN PATENT SPECIFICATION

(11) **EP 3 042 788 B1**
(45) Date of publication and mention of the grant of the patent: **18.04.2018**
(21) Application number: 16150156.4
(22) Date of filing: 05.01.2016
(51) Int. Cl.: B60C 9/18, B29B 15/08, B29D 30/06, B60C 1/00

(54) **CAP PLY FOR PNEUMATIC TIRE AND METHOD OF MANUFACTURING CAP PLY FOR PNEUMATIC TIRE**
DECKLAGE FÜR LUFTREIFEN UND VERFAHREN ZUR HERSTELLUNG EINER DECKLAGE FÜR LUFTREIFEN
NAPPE DE SOMMET POUR PNEUMATIQUE ET PROCÉDÉ DE FABRICATION ASSOCIÉ

(30) Priority: 09.01.2015 KR 20150003544
(43) Date of publication of application: 13.07.2016
(73) Proprietor: Kumho Tire Co., Inc., Gwangju 62392 (KR)
(72) Inventor: LEE, Gab Bae, 62392 Gwangju (KR)
(74) Representative: Kindermann, Peter

(56) References cited:
- FR-A1- 2 964 906
- KR-A- 20140 028 711
- KR-A- 20140 043 002

## Description

### TECHNICAL FIELD

The present invention relates to a cap ply for a pneumatic tire and a method of manufacturing a cap ply for a pneumatic tire.

### BACKGROUND

In general, a tire may have a support function of supporting an overall weight of a motor vehicle, a power delivery function of delivering drive power and brake power of a motor vehicle to a road surface, a shock relieving function of relieving an external shock generated due to an irregular road surface, and a position changing function of changing a position depending on a moving direction of a motor vehicle.

A radial tire used in a motor vehicle has a structure in which several layers are laminated one above another. The typical radial tire may have a structure in which a tread, a belt, a body ply and an inner liner are laminated in the named order from the outermost side. A cap ply that minimizes the movement of the belt and enhances the driving stability may be provided between the tread and the belt.

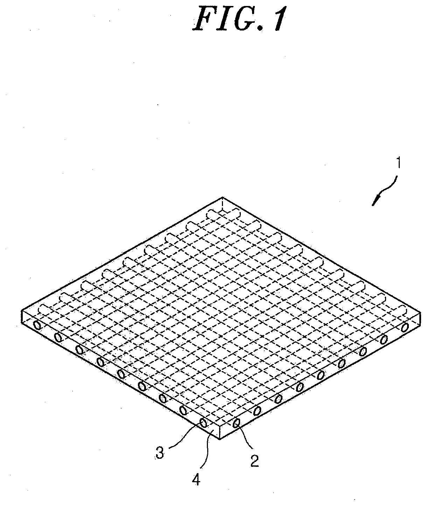

Fig. 1 is a view illustrating a structure of a cap ply 1 for a pneumatic tire. As a cap ply 1 that constitutes an existing pneumatic tire, there has been used a woven fabric which includes warp cords 2 formed by twisting nylon fibers as a synthetic fibers and weft cords 3 orthogonal to the warp cords 2. However, the thickness of the cords 2 and 3 having an intersecting structure ranges from 0.8 mm to 1.6 mm. Thus, when installing an additional rubber topping 4, the thickness of the cap ply 1 may be increased.

### [Prior Art Documents]

Document KR 2014 0043002 A on which the preamble of claim 1 is based discloses a cap ply for a pneumatic tire, comprising a film layer, a coating layer configured to surround an outer surface of the film layer, and a rubber topping layer configured to surround an outer surface of the coating layer.

Moreover, document FR 2 964 906 A1 discloses a further cap ply for a pneumatic tire, comprising a film layer, a coating layer and a rubber topping layer which surrounds an outer surface of the coating layer.

It is an object of the present invention to provide a cap ply for a pneumatic tire and a method for manufacturing the same, wherein an enhanced durability and a reduced weight are achieved.

According to the present invention this object is achieved with respect to the cap ply by the features of independent claim 1 and with respect to the method by the measures of independent claim 5.

Advantageous embodiments are defined by the further dependent claims.

### BRIEF DESCRIPTION OF THE DRAWINGS

Fig. 1 is a view illustrating a structure of a conventional cap ply for a pneumatic tire.
Fig. 2 is a partially-cutaway perspective view illustrating a pneumatic tire including a cap ply according to one embodiment of the present invention.
Fig. 3 is a sectional view of the pneumatic tire illustrated in Fig. 2.
Fig. 4 is a view illustrating a cap ply for a pneumatic tire according to one embodiment of the present invention.
Fig. 5 is a sectional view taken along line A-A in Fig. 4.
Fig. 6 is a flowchart of a method of manufacturing a cap ply for a pneumatic tire according to one embodiment of the present invention.

### DETAILED DESCRIPTION

Embodiments for realizing the present invention will now be described in detail with reference to the accompanying drawings.

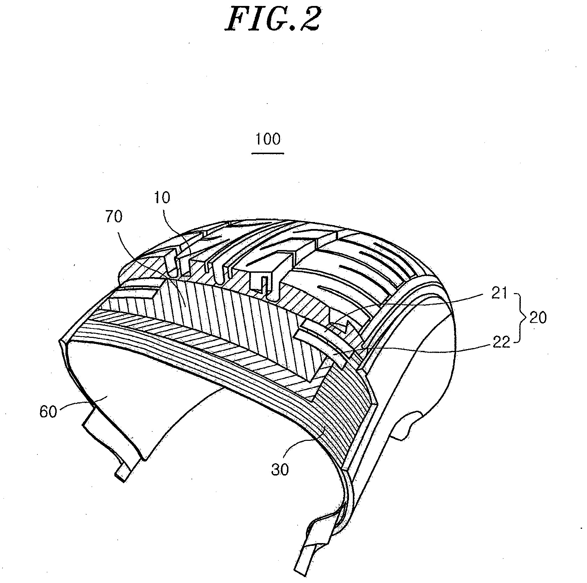

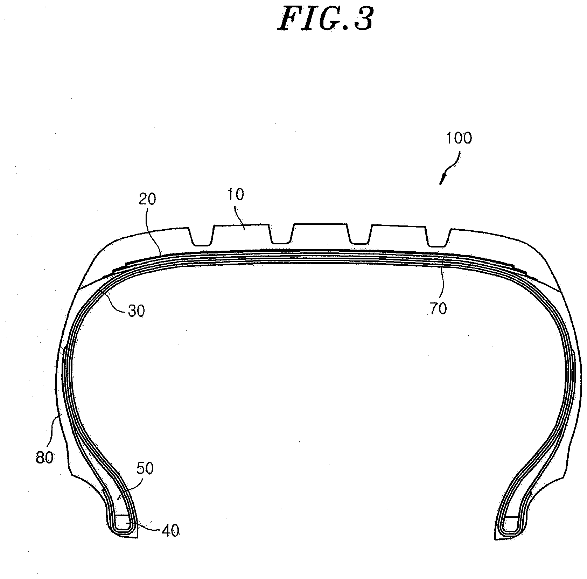

Fig. 2 is a partially-cutaway perspective view illustrating a pneumatic tire 100 including a cap ply 20 according to one embodiment of the present invention. Fig. 3 is a sectional view of the pneumatic tire 100 illustrated in Fig. 2.

Referring to Figs. 2 and 3, the pneumatic tire 100 according to one embodiment of the present invention may include a tread 10, a body ply 30, beads 40, apexes 50, an inner liner 60, sidewalls 80, a belt 70, and a cap ply 20.

The tread 10 is a portion which makes contact with a road surface, and is capable of delivering brake power and drive power of a motor vehicle to the road surface. The body ply 30 is a cord layer existing within the pneumatic tire and is capable of supporting a weight of a motor vehicle and absorbing a shock generated by a road surface. The beads 40 are rectangular or hexagonal wire bundles formed by coating rubber on steel wires and are capable of seating and fixing the pneumatic tire 100 on a rim. The apexes 50 have a function of minimizing dispersion of the beads 40 and protecting the beads 40 from an external shock.

The inner liner 60 is used in place of a tube and is positioned at the innermost side of the pneumatic tire 100. The inner liner 60 can prevent leakage of an air. The belt 70 is positioned between the tread 10 and the body ply 30. The belt 70 can relieve an external shock and can widen the ground contact surface of the tread 10, thereby enhancing the driving stability of a motor vehicle.

The pneumatic tire 100 according to the present embodiment may be, for example, a high speed tire having a flatness ratio of 55 or less, a load index of 90 or more and a speed index of H-speed or more, and a battery vehicle tire having a flatness ratio of 65 or more and a width of less than 175. However, the structure of the pneumatic tire 100 according to the present embodiment is not limited to the aforementioned one but may include many different configurations. Some of the aforementioned configurations may be omitted.

The cap ply 20 according to the present embodiment can prevent a phenomenon of interlayer separation of the belt 70. Furthermore, the cap ply 20 according to the present embodiment is used to minimize the movement of the belt 70 during a driving process and to enhance the driving stability. The cap ply 20 may be provided between the tread 10 and the belt 70.

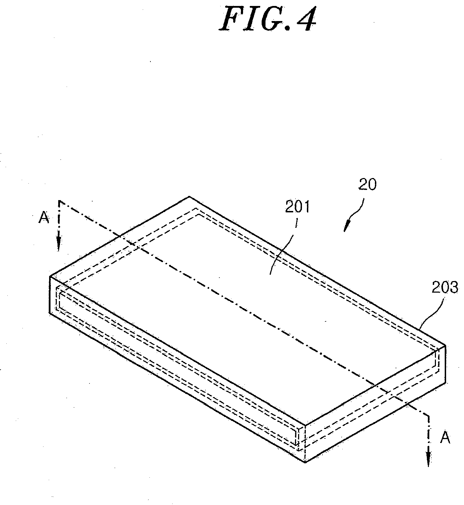

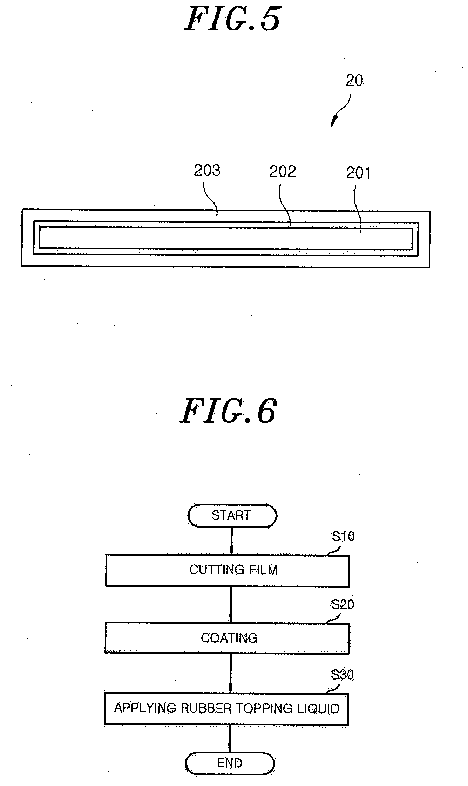

Fig. 4 is a view illustrating the cap ply 20 for a pneumatic tire 100 according to one embodiment of the present invention. Fig. 5 is a sectional view taken along line A-A in Fig. 4.

Referring to Figs. 4 and 5, a plurality of cap plies 20 may be attached to the upper side of the belt 70. As illustrated in Fig. 2, one cap ply 21 may be disposed in a spaced-apart relationship with another adjoining cap ply 22. If the cap plies 21 and 22 are disposed with no gap, an overlapping section may be generated between the adjoining cap plies 21 and 22. Thus, a bonding force of a boundary surface may be reduced.

However, if the cap plies 21 and 22 are disposed in a spaced-apart relationship with each other as in the present embodiment, it is possible to prevent the cap plies 21 and 22 from being attached in a mutually overlapping relationship. Accordingly, it is possible to prevent reduction of a bonding force of a boundary surface. In this case, the gap between the cap plies 20 may be about 3 mm. If the gap between the cap plies 20 exceeds 3 mm, the reinforcing effect of the cap plies 20 may be reduced. Each of the cap plies 20 may include a film layer 201, a coating layer 202 and a rubber topping layer 203.

The film layer 201 serves as a framework which enhances the durability of the cap ply 20. The film layer 201 may be a film produced by a melt spinning method. The film layer 201 may be produced by a polymer material capable of being melted. Examples of the polymer material may include polyethylene terephthalate, polyethylene naphthalate, nylon-6, nylon-66, and so forth. The thickness of the film layer 201 may be 0.2 mm to 1.0 mm.

The surface roughness of the film layer 201 may be 10 nm to 100 nm. Furthermore, the bonding force between the film layer 201 and another adjoining rubber may be 10.0 kgf/cm². Moreover, the thermal shrinkage coefficient of the film layer 201 may be 4.0% or less when the film layer 201 is left alone at 160 degrees C for 15 minutes. In addition, the density of the film layer 201 may be 1 to 2.3 kgf/cm³ or more.

The flexing fatigue property of the film layer 201 may be 40% or more. If the flexing fatigue property of the film layer 201 is less than 40%, the probability of generation of a film crack phenomenon caused by a continuous fatigue during the use of the pneumatic tire 100 may be increased.

The coating layer 202 is a portion which covers the surface of the film layer 201 and may be configured to surround the entire outer surface of the film layer 201. The coating layer 202 may be a rubber-based bonding liquid having a bonding property. The coating layer 202 may cause the film layer 201 to be cross-linked with an adjoining rubber by sulfur. The coating layer 202 may be made of, for example, resorcinol formaldehyde latex. The latex used at this time may include 1.8 to 6.0 wt% of vinyl pyridine latex.

The rubber topping layer 203 is a layer coated on the coating layer 202 and surrounds the outer surface of the coating layer 202. The rubber topping layer 203 may be an NR-based natural rubber in which the weight ratio of carbon black is 10 to 15 PHR. The rubber topping layer 203 can prevent the coating layer 202 from being destroyed by the light such as ultraviolet rays or the like and other materials. Furthermore, the rubber topping layer 203 can reinforce the film layer 201, thereby improving the structural stability of the cap ply 20. To this end, the rubber topping layer 203 may be formed on the surface of the coating layer 202 immediately after formation of the coating layer 202.

Table 1 shows the results of tests performed by attaching a plurality of cap plies 20 having the aforementioned structure to the belt 70 at intervals of 3 mm and then applying the same to a pneumatic tire 100 for an electric vehicle having a size of 155/70 R19.

**Table 1**

| | Comparative example 1 | Comparative example 2 | Example 1 | Example 2 | Example 3 | Example 4 |
|---|---|---|---|---|---|---|
| Construction | N-66 1260D/2P | Hybrid 1000D+840D | PET film | N-66 film | N-46 film | PEN film |
| Thickness (mm) | 1.0mm | 1.0mm | 0.5mm | 0.5mm | 0.5mm | 0.5mm |
| Bonding force with adjoining rubber | 100% | 98% | 100% | 100% | 100% | 95% |
| Bonding force with adjoining rubber (Aged at 75°Cfor 7 days) | 95% | 95% | 95% | 95% | 95% | 95% |
| Weight of pneumatic tire | 100 | 103 | 95% or less | 95% or less | 95% or less | 95% or less |
| Load durability | 100 | 103 | 106 | 104 | 104 | 105 |
| Speed durability | 100 | 102 | 105 | 103 | 104 | 104 |
| High speed/high load durability | 100 | 103 | 105 | 104 | 103 | 104 |

Test methods are as follows.

### (a)Load Durability Evaluation

After the pneumatic tire 100 is mounted to a rim, an air is injected into the pneumatic tire 100 at a pressure of 179,26 kPa (26 psi). In the case of a general tire, a test is started at an initial speed of 120 km/hr. In the case of a snow tire, a test is started at an initial speed of 110 km/hr. The test is conducted by driving the tire at 85% of the maximum load for 4 hours and then driving the tire at a 5%-increased load for 6 hours. Thereafter, the tire is driven at a constant speed at the maximum load for 24 hours and is then driven until occurrence of an accident by applying a load of 8.5% every 2 hours.

### (b) Speed Durability Evaluation

After the pneumatic tire 100 is mounted to a rim, an air is injected into the pneumatic tire 100 at a pressure of 220,63 kPa (32 psi). In the case of a general tire, a test is started at an initial speed of 140 km/hr. In the case of a snow tire, a test is started at an initial speed of 130 km/hr. The tire is driven up to 80 km for 2 hours while applying 85% of the maximum load for 4 hours. Thereafter, the tire is left alone for two hours and is then driven until occurrence of an accident by increasing the speed by 10 km/hr every 30 minutes from an initial speed of 140 km/hr.

### (c) High Speed/High Load Durability Evaluation

After the pneumatic tire 100 is mounted to a rim, an air is injected into the pneumatic tire 100 at a pressure of 220,63 kPa (32 psi). In the case of a general tire, a test is started at an initial speed of 140 km/hr. In the case of a snow tire, a test is started at an initial speed of 130 km/hr. The test is conducted by driving the tire at 85% of the maximum load for 4 hours and then driving the tire at a 5%-increased load for 6 hours. Thereafter, the tire is left alone for 24 hours. Then, the air pressure is reduced to 172,37 kPa (25 psi). The test is conducted at 100% of the initial load for 1.5 hours at a speed of 140 km/hr. Thereafter, the tire is driven until occurrence of an accident by applying a load of 8.5% every 2 hours.

### (d) Bonding Force with Adjoining Rubber

In a method of evaluating a bonding force of the cap ply 20 with an adjoining rubber, a sheet of adjoining rubber having a thickness of 1.5 mm to 2.5 mm is prepared.

After attaching the cap ply 20 to the adjoining rubber, the tire is vulcanized at 160 degrees C for 20 minutes under a vulcanizing pressure of 18 kgf/cm² and is left alone at least for 4 hours. Thereafter, the bonding force of the cap ply 20 with the adjoining rubber is evaluated.

As shown in Table 1, it can be noted that, despite the reduction of thickness to 0.5 mm, the cap ply 20 including the film layer 201 is higher in load durability, speed durability and high speed/high load durability than the cap plies (of comparative examples 1 and 2) having a woven cord structure. Furthermore, it can be confirmed that the overall weight of the pneumatic tire 100 is reduced.

Hereinafter, descriptions will be made on a method of manufacturing a cap ply 20 for a pneumatic tire 100 according to one embodiment of the present invention.

The film layer 201 of the cap ply 20 according to one embodiment of the present invention may be produced by melt-spinning a polymer material such as polyethylene terephthalate, polyethylene naphthalate, nylon-6, nylon-66, or the like. Then, the film layer 201 may be cut into a predetermined width by slitting rollers disposed one above the other (S10) .

The film layer 201 processed in a specified form may be coated with a rubber-based bonding liquid such as resorcinol formaldehyde latex or the like (S20). Thus, the coating layer 202 may be formed on the entire outer surface of the film layer 201. The latex used at this time may include 1.8 to 6.0 wt% of vinyl pyridine latex. Since the coating step (S20) is performed after the shape processing (cutting) of the film layer 201 is completed, it is possible to coat the coating layer 202 on the entire surface of the film layer 201.

If the coating step (S20) is completed, a rubber topping liquid may be immediately applied on the surface of the coating layer 202 (S30). Thus, the rubber topping layer 203 may be formed on the entire outer surface of the coating layer 202. The rubber topping liquid applied on the coating layer 202 may be, for example, an NR-based natural rubber in which the weight ratio of carbon black is 10 to 15 PHR.

By immediately applying the rubber topping liquid (S30) after the coating step (S20), it is possible to prevent the RFL coating layer from being destroyed by an external environment or a destructive material such as ultraviolet rays or the like. Since the weight ratio of carbon black in the rubber topping liquid falls within a range of 10 to 15 PHR, the fluidity of the rubber topping liquid is large. This enables the rubber topping liquid to be easily applied on the coating layer 202.

In the cap ply 20 according to one embodiment of the present invention, the conventional cord having an intersecting structure is replaced by the film layer 201. It is therefore possible to reduce the thickness and weight of the cap ply 20. Since the film layer 201 has a rectangular parallelepiped shape with a uniform thickness, it is possible to easily perform the coating step (S20) and the rubber topping liquid applying step (S30). In addition, the finally-formed cap ply 20 has a uniform thickness and shape. It is therefore possible to enhance the structural stability of the belt 70 and the pneumatic tire 100.

Since the rubber topping liquid has fluidity, it is possible to uniformly and smoothly apply the rubber topping liquid on the coating layer 202. Accordingly, it is possible to reduce the manufacturing time and manufacturing cost of the cap ply 20. In as much as the cap ply 20 has a structure in which the film layer 201, the coating layer 202 with a bonding force and the rubber topping layer 203 are laminated one above another, it is possible to secure a structural strength.

## Claims

1. A cap ply (20) for a pneumatic tire, comprising:
a film layer (201);
a coating layer (202) configured to surround an outer surface of the film layer (201); and
a rubber topping layer (203) configured to surround an outer surface of the coating layer (202),
**characterized in that**
the rubber topping layer (203) is an NR-based natural rubber in which a weight ratio of carbon black is in a range from 10 to 15 PHR.

2. The cap ply of claim 1, **characterized in that** the cap ply (20) is provided between a tread (10) and a belt (70) of the pneumatic tire, and the cap ply (20) is provided as a plurality of plies which are disposed in a spaced-apart relationship with each other.

3. The cap ply of claim 1, **characterized in that** the rubber topping layer (203) is formed by applying a rubber topping liquid having fluidity on the outer surface of the coating layer (202).

4. The cap ply of claim 1, **characterized in that** the film layer (201) is produced by a polymer material selected from a group consisting of polyethylene terephthalate, polyethylene naphthalate, nylon-6 and nylon-66.

5. A method of manufacturing a cap ply for a pneumatic tire, comprising:
forming a film layer (201) by cutting a film;
forming a coating layer (202) by coating a coating liquid on the film layer (201); and
forming a rubber topping layer (203) by applying a rubber topping liquid on the coating layer (202),
**characterized in that**
the rubber topping liquid is an NR-based natural rubber in which a weight ratio of carbon black is in a range from 10 to 15 PHR.

6. The method of claim 5, **characterized in that** the film layer (201) is produced by melt-spinning a polymer material selected from a group consisting of polyethylene terephthalate, polyethylene naphthalate, nylon-6 and nylon-66.

7. The method of claim 5, **characterized in that** in the forming the coating layer (202), the coating layer (202) is coated on an entire outer surface of the film layer (201).

8. The method of claim 5, **characterized in that** the forming the rubber topping layer (203) is performed immediately after the forming the coating layer (202).

9. The method of claim 5, **characterized in that** in the forming the coating layer (202), the coating liquid coated on the film layer is resorcinol formaldehyde latex which includes 1.8 to 6.0 wt% of vinyl pyridine latex.

## Patentansprüche

1. Decklage (20) für einen Luftreifen, umfassend:
eine Filmschicht (201);
eine Überzugsschicht (202), die dafür gestaltet ist, eine Außenoberfläche der Filmschicht (201) zu umgeben; und
eine Kautschuk-Abdeckschicht (203), die dafür gestaltet ist, eine Außenoberfläche der Überzugsschicht (202) zu umgeben,
**dadurch gekennzeichnet, dass**
die Kautschuk-Abdeckschicht (203) ein Naturkautschuk auf NR-Basis ist, bei dem der Gewichtsanteil von Ruß in dem Bereich von 10 bis 15 PHR liegt.

2. Decklage gemäß Anspruch 1, **dadurch gekennzeichnet, dass** die Decklage (20) zwischen einer Lauffläche (10) und einem Gürtel (70) des Luftreifens angeordnet ist und dass die Decklage (20) als Vielzahl von Lagen bereitgestellt ist, die in voneinander beabstandeter Beziehung angeordnet sind.

3. Decklage gemäß Anspruch 1, **dadurch gekennzeichnet, dass** die Kautschuk-Abdeckschicht (203) durch Aufbringen einer Kautschuk-Abdeckflüssigkeit mit Fluidität auf die Außenoberfläche der Überzugsschicht (202) gebildet ist.

4. Decklage gemäß Anspruch 1, **dadurch gekennzeichnet, dass** die Filmschicht (201) aus einem Polymermaterial ausgewählt aus der Gruppe bestehend aus Polyethylenterephthalat, Polyethylennaphthalat, Nylon-6 und Nylon-66 hergestellt ist.

5. Verfahren zum herstellen einer Decklage für einen Luftreifen, umfassend:
Bilden einer Filmschicht (201) durch Schneiden eines Films;
Bilden einer Überzugsschicht (202) durch Schichten einer Überzugsflüssigkeit auf die Filmschicht (201); und
Bilden einer Kautschuk-Abdeckschicht (203) durch Aufbringen einer Kautschuk-Abdeckflüssigkeit auf die Überzugsschicht (202),
**dadurch gekennzeichnet, dass**
die Kautschuk-Abdeckflüssigkeit ein Naturkautschuk auf NR-Basis ist, bei dem der Gewichtsanteil von Ruß in dem Bereich von 10 bis 15 PHR liegt.

6. Verfahren gemäß Anspruch 5, **dadurch gekennzeichnet, dass** die Filmschicht (201) durch Schmelzspinnen eines Polymermaterials ausgewählt aus der Gruppe bestehend aus Polyethylenterephthalat, Polyethylennaphthalat, Nylon-6 und Nylon-66 hergestellt ist.

7. Verfahren gemäß Anspruch 5, **dadurch gekennzeichnet, dass** bei der Herstellung der Überzugsschicht (202) die Überzugsschicht (202) auf die gesamte Außenoberfläche der Filmschicht (201) geschichtet wird.

8. Verfahren gemäß Anspruch 5, **dadurch gekennzeichnet, dass** die Herstellung der Kautschuk-Abdeckschicht (203) unmittelbar nach der Herstellung der Überzugsschicht (202) durchgeführt wird.

9. Verfahren gemäß Anspruch 5, **dadurch gekennzeichnet, dass** bei der Herstellung der Überzugsschicht (202) die auf die Filmschicht geschichtete Überzugsflüssigkeit Resorcinol-Formaldehyd-Latex ist, der 1,8 bis 6,0 Gew.-% Vinylpyridinlatex enthält.

## Revendications

1. Nappe de sommet (20) pour un pneumatique, comprenant :
une couche de film (201) ;
une couche de revêtement (202) configurée pour entourer une surface extérieure de la couche de film (201) ; et
une couche de garniture en caoutchouc (203) configurée pour entourer une surface extérieure de la couche de revêtement (202),
**caractérisée en ce que**
la couche de garniture en caoutchouc (203) est un caoutchouc naturel à base de NR dans lequel un rapport pondéral du noir de carbone est de 10 à 15 PHR.

2. Nappe de sommet selon la revendication 1, **caractérisée en ce que** la nappe de sommet (20) est présente entre une bande de roulement (10) et une ceinture (70) du pneumatique, et la nappe de sommet (20) est présente sous la forme d'une pluralité de nappes qui sont disposées de façon à être espacées les unes des autres.

3. Nappe de sommet selon la revendication 1, **caractérisée en ce que** la couche de garniture en caoutchouc (203) est formée par application d'un liquide de garniture en caoutchouc ayant une fluidité sur la surface extérieure de la couche de revêtement (202).

4. Nappe de sommet selon la revendication 1, **caractérisée en ce que** la couche de film (201) est formée d'un matériau polymère sélectionné dans un groupe constitué du téréphtalate de polyéthylène, du naphtalate de polyéthylène, du nylon 6 et du nylon 66.

5. Procédé de fabrication d'une nappe de sommet pour un pneumatique, comprenant :
la formation d'une couche de film (201) par découpage d'un film ;
la formation d'une couche de revêtement (202) par application d'un liquide de revêtement sur la couche de film (201) ; et
la formation d'une couche de garniture en caoutchouc (203) par application d'un liquide de garniture en caoutchouc sur la couche de revêtement (202),
**caractérisé en ce que**
le liquide de garniture en caoutchouc est un caoutchouc naturel à base de NR dans lequel un rapport pondéral du noir de carbone est de 10 à 15 PHR.

6. Procédé selon la revendication 5, **caractérisé en ce que** la couche de film (201) est produite par filage en fusion d'un matériau polymère sélectionné dans un groupe constitué du téréphtalate de polyéthylène, du naphtalate de polyéthylène, du nylon 6 et du nylon 66.

7. Procédé selon la revendication 5, **caractérisé en ce que** lors de la formation de la couche de revêtement (202), la couche de revêtement (202) est appliquée sur une surface externe entière de la couche de film (201).

8. Procédé selon la revendication 5, **caractérisé en ce que** la formation de la couche de garniture en caoutchouc (203) est réalisée immédiatement après la formation de la couche de revêtement (202).

9. Procédé selon la revendication 5, **caractérisé en ce que** lors de la formation de la couche de revêtement (202), le liquide de revêtement appliqué sur la couche de film est un latex de résorcinol formaldéhyde qui comprend 1,8 à 6,0 % en poids de latex de vinylpyridine.
